# EUROPEAN PATENT APPLICATION

(11) **EP 4 789 839 A1**
(43) Date of publication of application: **12.08.2026**
(21) Application number: 24874625.7
(22) Date of filing: 02.10.2024
(51) Int. Cl.: B29C 49/02, B29B 9/12, B29B 17/02, B29C 49/12, B65D 1/00, C08K 3/00, C08K 3/26, C08K 3/34, C08L 23/04, C08L 23/06, C08L 23/10, C08L 23/12, C08L 91/06

(54) **BLOW-MOLDED ARTICLE, METHOD FOR PRODUCING TONER BOTTLE AND BLOW-MOLDED ARTICLE, MOLDED ARTICLE, AND PELLET**

(30) Priority: 03.10.2023 JP 2023172338; 03.10.2023 JP 2023172343; 19.08.2024 JP 2024137903
(71) Applicant: Canon Kabushiki Kaisha, Tokyo 146-8501 (JP)
(72) Inventor: DOI, Yohei, Tokyo 146-8501 (JP); ASHIBE, Tsunenori, Tokyo 146-8501 (JP)
(74) Representative: TBK
(86) International application number: PCT/JP2024/035201
(87) International publication number: WO 2025/075024

(57) **Abstract**

A blow-molded article comprising: at least one selected from the group consisting of an inorganic layered double hydroxide and zeolite; polyethylene or polypropylene; and a wax.

## Description

### [Technical field]

The present disclosure relates to a blow-molded article, a toner bottle, and a method of manufacturing a blow-molded article. The present disclosure also relates to a molded article and a pellet.

### [Background Art]

A toner bottle containing a toner to be supplied to an electrophotographic image forming apparatus is required to have high strength, such as being unbreakable even when dropped. Thus, molded articles obtained by blow molding polypropylene (hereinafter, "PP") are sometimes used. Japanese Patent Laid-Open No. 2000-178390 discloses a container that is a blow-molded article of PP. Molded articles obtained by blow-molding polyethylene (hereinafter sometimes referred to as "PE") may also be used. Japanese Patent Laid-Open No. 2010-260638 discloses a toner container that is a blow-molded article of PE.

In recent years, from an environmental protection perspective, it has been widely practiced to collect thermoplastic resin products and parts thereof, temporarily change the original shape thereof, and thereafter recycle the same. As a method for recycling a thermoplastic resin, such as PE or PP, chemical recycling and material recycling are known, as described in paragraph [0002] of Japanese Patent Laid-Open No. 2009-001693.

### [Citation List]

### [Patent Document]

[Patent Document 1] Japanese Patent Laid-Open No. 2000-178390
[Patent Document 2] Japanese Patent Laid-Open No. 2009-001693
[Patent Document 3] Japanese Patent Laid-Open No. 2010-260638

### [Summary of Invention]

### [Technical Problem]

However, chemical recycling requires a multi-stage steps, as disclosed in Japanese Patent Laid-Open No. 2009-001693, and further requires a decomposing facility and a refining processing facility therefor, thus resulting in high recycling cost. In addition, the environmental load is large.

Meanwhile, bottles are generally washed in material recycling. However, bottle may be washed multiple times using water, acid, alkali, or the like, and a drying step is also required. Therefore, bottle washing can also increase environmental load.

From an environmental load saving perspective, the present inventors have simplified or omitted washing of toner bottles to be recycled, and reproduced toner bottles by using PE or PP obtained from toner bottles with a toner remaining adhered to the inside thereof. The present inventors have found that, when a toner is stored in a toner bottle obtained as such, the toner particle surface may be deformed at the contact portion between the toner in the toner bottle and the inner surface of the toner bottle. Toner particles with the deformed surface may cause development failure, and the development failure may cause image density non-uniformity in an electrophotographic image.

At least one aspect of the present disclosure aims to provide a blow-molded article capable of preventing the migration of a wax to the surface of the blow-molded article, on the assumption that polyethylene or polypropylene is used, with the wax, as a raw material. Further, at least one aspect of the present disclosure aims to provide a toner bottle capable of preventing a change in quality of stored toner. Further, at least one aspect of the present disclosure aims to provide a method of manufacturing a blow-molded article capable of preventing the migration of a wax to the surface of the blow-molded article, on the assumption that polyethylene or polypropylene is used, with the wax, as a raw material.

Further, at least one aspect of the present disclosure aims to provide a molded article capable of preventing migration of a wax to the surface, on the assumption that polyethylene or polypropylene is used, with the wax, as a raw material. Still, at least one aspect of the present disclosure aims to provide a pellet that contributes to the inhibition of the migration of a wax to the surface of a molded article.

### [Solution to Problem]

At least one aspect of the present disclosure provides a blow-molded article comprising:
at least one selected from the group consisting of an inorganic layered double hydroxide and zeolite;
polyethylene or polypropylene; and
a wax.

At least one aspect of the present disclosure provides a toner bottle comprising:
at least one selected from the group consisting of an inorganic layered double hydroxide and zeolite;
polyethylene or polypropylene; and
a wax.

At least one aspect of the present disclosure provides a method of manufacturing the above blow-molded article, the method comprising:
a step of preparing a preform containing at least one selected from the group consisting of the inorganic layered double hydroxide and the zeolite, the polyethylene or the polypropylene, and the wax, and
a molding step of stretch blow molding the preform to form the blow-molded article.

At least one aspect of the present disclosure provides a method of manufacturing the above blow-molded article, the method comprising:
a step of preparing a pellet containing at least one selected from the group consisting of the inorganic layered double hydroxide and the zeolite, the polyethylene or the polypropylene, and the wax, and
a molding step of blow molding the pellet to form the blow-molded article.

At least one aspect of the present disclosure provides a molded article, comprising:
at least one selected from the group consisting of an inorganic layered double hydroxide and zeolite;
polyethylene or polypropylene; and
a wax.

At least one aspect of the present disclosure provides a pellet, comprising:
at least one selected from the group consisting of an inorganic layered double hydroxide and zeolite;
polyethylene or polypropylene; and
a wax.

### [Advantageous Effects of Invention]

At least one aspect of the present disclosure can provide a blow-molded article capable of preventing the migration of a wax to the surface of the blow-molded article, on the assumption that polyethylene or polypropylene is used with the wax as a raw material. Further, at least one aspect of the present disclosure can provide a toner bottle capable of preventing a change in quality of a stored toner. Further, at least one aspect of the present disclosure can provide a method of manufacturing a blow-molded article capable of preventing the migration of a wax to the surface of the blow-molded article, on the assumption that polyethylene or polypropylene is used with the wax as a raw material. In addition, at least one aspect of the present disclosure can provide a molded article in which the migration of a wax to the surface is prevented. Still, at least one aspect of the present disclosure aims to provide a pellet that contributes to the inhibition of the migration of a wax to the surface of a molded article.

### [Brief Description of the Drawings]

FIG. 1 is a schematic view of an image forming apparatus.
FIG. 2 is a schematic view illustrating a method for molding a preform.
FIG. 3 is a schematic view illustrating a blow molding method.
FIG. 4 is a schematic view of a one-stage blow molding.
FIG. 5 is a schematic view illustrating the migration of wax-derived components.
FIG. 6 is a schematic view of a blow bottle.
FIG. 7 is a schematic view of a blow bottle.

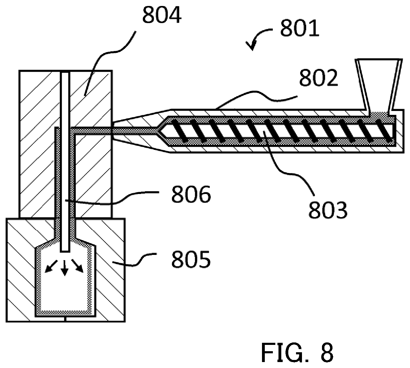

FIG. 8 is a schematic view illustrating a blow molding method.

### [Description of Embodiments]

With reference to the drawings, exemplary embodiments for carrying out the present disclosure will be described in detail below. However, the scope of the invention is not limited to the following embodiments. In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily. In the present disclosure, for instance, a wording such as "at least one selected from the group consisting of XX, YY and ZZ" encompasses XX, YY, ZZ, a combination of XX and YY, a combination of XX and ZZ, a combination of YY and ZZ, and a combination of XX, YY and ZZ.

As described above, the surface of a stored toner may be deformed when a toner is stored in a toner bottle (hereinafter, also referred to as a "recycled toner bottle") molded using material recycled PE (hereinafter, also referred to as "MR-PE") or material recycled PP (hereinafter, also referred to as "MR-PP") obtained from toner bottles with a toner remained adhered thereto. The inventors infer the reason therefor as follows. That is, the recycled toner bottles are believed to contain waxes that were present in the toner remained in the original toner bottles prior to recycling. Further, the recycled toner bottle may contain decomposed low-molecular-weight products, such as thermally decomposed substances of waxes caused by heat during the recycling process and blow molding, and, depending on the type of waxes, hydrolyzed substances of waxes caused by moisture. Hereinafter, a compound derived from a wax, such as a thermally decomposed substance or a hydrolyzed substance of a wax, including the wax, will be referred to as a wax-derived component. At least a portion of a wax-derived component is considered to exist on the inner surface of the recycled toner bottle. In particular, when a wax contains decomposed substances, the wax tends to migrate to the surface due to a lowering of the molecular weight thereof. The surface of toner particles is believed to be deformed when toner stored in the recycle toner bottle comes into contact with the wax-derived components exposed on the inner surface of the recycle toner bottle. The deformation phenomenon of the surface of a toner particle due to waxes may sometimes be referred to as chemical attacks hereinafter.

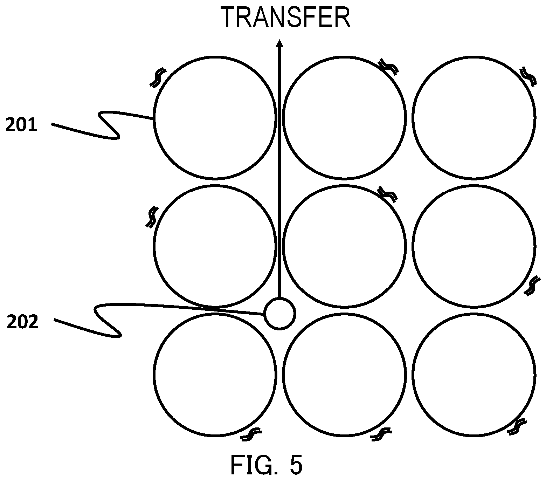

As described above, it is believed that a wax-derived component resulting from recycled polypropylene, such as MR-PP, or a wax-derived component resulting from a wax mixed in recycled polyethylene, such as MR-PE, will cause chemical attacks. As illustrated in FIG. 5, the wax-derived component 202 migrates toward the surface of the toner bottle in the process of molding the toner bottle, in which the temperature of the PE resin or PP resin 201 is equal to or above the glass transition temperature. At a temperature equal to or above the glass transition temperature of the PE resin or PP resin, the PE resin or PP resin exhibits increased thermal motion. The wax-derived component migrates to the surface of the bottle through the voids in the PE or PP resin. As mentioned above, the wax-derived components tend to migrate to the surface of the molded article because of the low molecular weight thereof.

The present inventors recognized that it is necessary to develop a technique for obtaining a blow-molded article that is less likely to cause chemical attacks on a toner in contact with the surface of the blow-molded article, even if it is a blow-molded article from a resin mixture containing material recycled polyethylene or material recycled polypropylene derived from toner bottles. The present inventors have made extensive studies on the basis of such a recognition, and, as a result, have found that the following blow-molded article hardly causes chemical attacks on a toner coming into contact with the surface of the blow-molded article.

That is, a blow-molded article according to at least one aspect of the present disclosure includes at least one selected from the group consisting of an inorganic layered double hydroxide and zeolite, polyethylene or polypropylene, and a wax.

As a result of studies made by the present inventors, the present inventors have found that chemical attacks can be prevented by allowing at least one selected from the group consisting of an inorganic layered double hydroxide and zeolite to exist in polyethylene or polypropylene with a wax. The reason for this is believed to be that at least one (hereinafter also referred to as zeolite, etc.) selected from the group consisting of an inorganic layered double hydroxide and zeolite adsorbs waxes, suppressing the migration of wax-derived components to the surface of the toner bottle.

In particular, since the toner is apt to be charged by friction with other members, it is believed that at least a part of the toner remaining in the toner bottle is electrically charged. Moreover, it is believed that the state of electrically charged toner is maintained even in the MR-PE or MR-PP. It is also believed that at least part of the wax contained in the MR-PE or at least part of the wax contained in the MR-PP is also electrically charged. The electrically charged wax is believed to be easily adsorbed by zeolite, etc.

Accordingly, the blow-molded article, the molded article, and the pellet according to the present disclosure contains at least one selected from the group consisting of an inorganic layered double hydroxide and zeolite, polyethylene or polypropylene, and a wax. A blow-molded article can be prepared, for example, by stretch blow molding a preform as a molded article molded from a resin mixture containing at least one selected from the group consisting of an inorganic layered double hydroxide and zeolite, polyethylene or polypropylene, and a wax. Alternatively, a blow-molded article can also be obtained by blow-molding a pellet as a molded article molded from a resin mixture containing at least one selected from the group consisting of an inorganic layered double hydroxide and zeolite, polyethylene or polypropylene, and a wax.

### Preform and Pellet

The preform (or pellet) used for blow molding preferably contains at least the following (a), (b), and (c):
(a) a wax;
(b) at least one selected from the group consisting of an inorganic layered double hydroxide and zeolite; and
(c) polyethylene or polypropylene.

Zeolite, etc., are covered with a polyethylene or polypropylene skin layer during molding of a preform (or a pellet) as a bottle precursor, and thus, zeolite, etc., are hard to precipitate on the surface of the bottle. Therefore, zeolite, etc., inhibit the absorbed wax from migrating to the surface of the bottle. This effect makes it easier to prevent chemical attacks by the wax.

Polypropylene is not particularly limited, and a known polypropylene can be used. The polypropylene may be a homopolymer, or a random copolymer or a block copolymer, which are copolymers. Examples of copolymers may include copolymers of ethylene and propylene.

The polypropylene may also be recycled PP, such as MR-PP, or may also be virgin PP with no reduction in molecular weight. However, the effect according to the present disclosure is more remarkably exhibited by the PP being MR-PP obtained by recycling toner bottles. Accordingly, the polypropylene is preferably material recycled polypropylene.

PE is not particularly limited, and known polyethylene may be used. Examples of polyethylene may include at least one polyethylene selected from the group consisting of high-density polyethylene (HDPE), low-density polyethylene (LDPE), and linear low-density polyethylene (LLDPE). The polyethylene preferably includes high-density polyethylene (HDPE). For example, KEIYO B5804 (product name, available from Keiyo Polyethylene Co., Ltd.) may be used as the polyethylene.

The polyethylene may be a recycled PE, such as MR-PE, or virgin PE with no reduction in molecular weight. However, the effect according to the present disclosure is more remarkably exhibited by the PE being MR-PE obtained by recycling toner bottles. Accordingly, the PE is preferably material recycled polyethylene.

The content of polyethylene or polypropylene in the blow-molded article, the molded article, the pellet, or the preform is not particularly limited, but is preferably 80% by mass or more, and more preferably 90% by mass or more, based on the mass of the blow-molded article, the molded article, the pellet, or the preform. The content is preferably 99.9% by mass or less, and more preferably 99.5% by mass or less. For example, the content is preferably within a range of 80% to 99.9% by mass, or 90% to 99.5% by mass.

The melt flow rate (MFR) of polyethylene or polypropylene is preferably from 0.1 g/min to 1.0 g/10 min, and particularly preferably from 0.1 g/10 min to 0.5 g/10 min at a temperature of 200°C under a measurement condition in accordance with Japanese Industrial Standard (JIS) K 7210-1:2014. When the MFR is 0.1 g/10 min or higher, polyethylene or polypropylene is likely to be sufficiently filled during blow molding. If the MFR is 1.0 g/10 min or lower, it is easy to maintain the shape of the molded article.

### Inorganic Layered Double Hydroxide

The blow-molded article, the molded article, and the pellet contains at least one selected from the group consisting of an inorganic layered double hydroxide and zeolite. The presence of the inorganic layered double hydroxide and zeolite in the blow-molded article, the molded article, and the pellet can be monitored by a measurement using a microscopic FT-IR.

Examples of inorganic layered double hydroxides may include kaolin, mica, and the like. As a compound that is more effective and readily available, a hydrotalcite compound represented by the general formula (1) below may be mentioned. The inorganic layered double hydroxide preferably includes a hydrotalcite compound.

General formula (1): M²⁺_{(1-X)}M³⁺_{X}(OH)₂Aⁿ⁻_{(X/n)}·mH₂O

(where 0 < X ≤ 0.5, m ≥ 0, M²⁺ is a bivalent metal ion, such as Mg²⁺ or Zn²⁺, M³⁺ is a trivalent metal ion, such as Al³⁺ or Fe³⁺, Aⁿ⁻ is an n-valent anion, such as CO₃²⁻, Cl⁻, or NO₃⁻, and n is an integer equal to or greater than 1)

The hydrotalcite compound represented by the general formula (1) is a layered compound including a positively charged base layer [M²⁺_{(1-X)}M³⁺_{X}(OH)₂]^{X+} and a negatively charged intermediate layer [Aⁿ⁻_{(X/n)}·mH₂O]^{X-}, and can be regarded as an intercalation compound in which the intermediate layer is inserted into the base layer. Generally, an intercalation compound has been known to exhibit unique chemical properties (reactivity). Meanwhile, in the case of the hydrotalcite compound represented by the general formula (1), it has been known that the anion (Aⁿ⁻) existing in the intermediate layer and another anion are easily exchanged (anion exchange). Although the mechanism of anion exchange has not been clarified, it is inferred that electrical interaction (attractive force) between the basic layer and the anion, the size of voids in the intermediate layer (thickness of the intermediate layer), adsorption effects, and other factors are acting in combination.

In the general formula (1), the divalent metal ion M²⁺ is preferably Mg²⁺, and the trivalent metal ion M³⁺ is preferably Al³⁺. As the n-valent anion, CO₃²⁻ and Cl⁻ are preferred.

The content of the inorganic layered double hydroxide is preferably 0.09% to 1.2% by mass, and more preferably 0.1% to 1.0% by mass, based on the mass of the blow-molded article, the molded article, or the pellet. When the content is 0.09% by mass or more, the inorganic layered double hydroxide can adsorb waxes more sufficiently, and the migration of waxes to the bottle surface is less likely to occur. When the content is 1.2% by mass or less, an inorganic layered double hydroxide is less likely to become the starting point for rupture during blow molding. Setting the blending amount to be within the above range makes it easier to achieve both suppression of chemical attacks and blowability.

### Zeolite

Zeolites are hydrated aluminosilicates including alkaline or alkaline-earth metals having a rigid anionic skeleton with regular channels (tubular pores) and cavities. Natural or artificial (synthetic) zeolites can be used with no limitation.

Zeolite having the following composition is preferable.

[Chem 1] (M ^{I} ,M ^{II} _{1/2})ₘ(AlₘSiₙO₂₍ₘ₊ₙ₎) · ₓH₂O, (n≧m) M ^{I} : Li⁺, Na⁺, K⁺, etc , M ^{II} : Ca²+, Mg²+, Ba²+, etc

M^{I} is preferably Na⁺. M^{II} is preferably Ca²⁺. m is preferably 1 to 384. n is preferably 0 to 27.

Zeolites exist with various skeletal structures. That is, examples of skeletal structures of zeolite include the LTA-type, FER-type, MWW-type, MFI-type, MOR-type, LTL-type, FAU-type, BEA-type, and other structures, which are certified by the International Zeolite Association. In the present disclosure, zeolite with any skeletal structure may be used, but the MFI-type zeolite is preferred. The MFI-type zeolite (ZSM-5) is aluminosilicate zeolite having a skeletal structure with pentasil units linked in a chain-like arrangement, the chemical formula of the unit cell of which is represented by [NaₘAlₘSi₉₆₋ₘO₁₉₂·16H₂O (0 < m < 27)].

The content of the wax is preferably 0.09% to 1.2% by mass, and more preferably 0.1% to 1.0% by mass, based on the mass of the blow-molded article (molded article, or pellet). When the content is 0.09% by mass or more, zeolite can adsorb waxes more sufficiently, and the migration of waxes to the bottle surface is less likely to occur. When the content is 1.2% by mass or less, zeolite is less likely to become the starting point for rupture during blow molding. Setting the blending amount to be within the above range makes it easier to achieve both suppression of chemical attack and blowability.

From the viewpoint of achieving both the chemical attack suppression and the blowability, the total content of the inorganic layered double hydroxide and zeolite is preferably 0.09% to 1.2% by mass, and more preferably 0.1% to 1.0% by mass, based on the mass of the blow-molded article (molded article or pellet).

The content proportion of the inorganic layered double hydroxide and zeolite in the blow-molded article (molded article or pellet) may be determined by the following means. After the mass of the blow-molded article has been measured, the blow-molded article is placed in a stainless steel container, and then left in an oven at 480°C for one hour to burn the resin in the blow-molded article. After that, ion exchange water is put in a stainless steel vessel containing a residue and sufficiently stirred, and the resulting mixture is filtered through a nylon mesh with an aperture that does not allow the inorganic layered double hydroxide and zeolite to path through. The aperture may be selected by taking the sizes of materials other than the inorganic layered double hydroxide and zeolite into consideration. The content proportion of the inorganic layered double hydroxide and zeolite can be determined by removing moisture from the filtrate in an oven at 100°C, measuring the total mass of the dried filtrate and nylon mesh, and subtracting the mass of the nylon mesh from the measured total mass. In this method, since the catalyst and carbon black contained in the resin pass through the nylon mesh, the content proportion of the inorganic layered double hydroxide and zeolite can be accurately measured. If the inorganic layered double hydroxide and the zeolite cannot be separated by filtration alone, known means may be further combined to determine the content.

The number-average particle diameter of the inorganic layered double hydroxide and zeolite is preferably 0.05 to 2.00 µm and more preferably 0.10 to 1.50 µm. An inorganic layered double hydroxide and zeolite with a number-average particle diameter of 0.05 µm or larger ensures good dispersibility in the resin. An inorganic layered double hydroxide and zeolite with a number-average particle diameter of 2.00 µm or smaller are less likely to be foreign objects during blow molding and helps suppress the rupture of a molded article.

### Wax

Examples of waxes include the following ones. Aliphatic hydrocarbon waxes, such as low molecular weight polyethylene, low molecular weight polypropylene, a polyolefin copolymer, a polyolefin wax, a microcrystalline wax, a paraffin wax, and a Fischer-Tropsch wax; oxides of aliphatic hydrocarbon waxes, such as an oxidized polyethylene wax; or a block copolymer thereof; plant-origin waxes, such as candelilla wax, carnauba wax, Japan wax, and jojoba wax; animal-origin waxes, such as beeswax, lanolin, and spermaceti; mineral-origin waxes, such as ozokerite, ceresin, and petrolatum; ester waxes containing a fatty acid ester, such as montan acid ester wax and castor wax, as the main component; and partially or completely deoxidized fatty acid esters, such as deoxidized carnauba wax.

Further examples may include saturated linear fatty acids, such as palmitic acid, stearic acid, montanoic acid, and other long-chain alkylcarboxylic acids having longer-chain alkyl groups; unsaturated fatty acids, such as brassidic acid, eleostearic acid, and parinaric acid; saturated alcohols, such as stearyl alcohol, eicosyl alcohol, behenyl alcohol, carnaubyl alcohol, ceryl alcohol, myricyl alcohol, and other alkyl alcohols having longer-chain alkyl groups; polyhydric alcohols, such as sorbitol; aliphatic amides such as linolamide, oleamide, and lauramide; saturated aliphatic bisamides, such as methylene bisstearamide, ethylene biscapramide, ethylene bislauramide, and hexamethylene bisstearamide; unsaturated aliphatic amides, such as ethylene bisoleamide, hexamethylene bisoleamide, N,N'-dioleyl adipamide, and N,N'-dioleyl sebacamide; aromatic bisamides, such as m-xylene bisstearamide and N,N'-distearyl isophthalamide; fatty acid metal salts (generally known as metal soaps), such as calcium stearate, calcium laurate, zinc stearate, and magnesium stearate; waxes in which vinyl monomers, such as styrene and acrylic acid, are grafted onto aliphatic hydrocarbon waxes; partially esterified products of fatty acids and polyhydric alcohols, such as behenic acid monoglyceride; and methyl ester compounds having a hydroxyl group obtained by hydrogenating vegetable oils and fats.

The wax preferably includes an ester wax. An ester wax is hydrolyzed in the process of recycling or molding and tends to be reduced in molecular weight. For this reason, chemical attacks may be liable to occur. Even in this case, the blow-molded article of the present disclosure can sufficiently suppress chemical attacks. A hydrolyzate of an ester wax may contain a carboxy group. The presence of the carboxy group is believed to facilitate the ion adsorption of hydrolyzate onto zeolite and similar materials, thereby sufficiently suppressing chemical attacks.

These waxes are preferably used after sharpening the molecular weight distribution thereof using methods such as the press sweating method, solvent method, recrystallization method, vacuum distillation method, supercritical gas extraction method, or melt crystallization method. These waxes are also preferably used after removing a low-molecular-weight solid fatty acid, a low-molecular-weight solid alcohol, a low-molecular-weight solid compound, and other impurities.

The presence of the wax in a blow-molded article (molded article or pellet) can be checked by GPC-FTIR.

Specific examples of waxes may include VISKOL (registered trademark) 330-P, 550-P, 660-P, and TS-200 (Sanyo Chemical Industries, Ltd.), Hi-WAX 400P, 200P, 100P, 410P, 420P, 320P, 220P, 210P, and 110P (Mitsui Chemicals, Inc.), Sasol Wax H1, H2, C80, C105, and C77 (Schumann Sasol), HNP-1, HNP-3, HNP-9, HNP-10, HNP-11, and HNP-12 (Nippon Seiro Co., Ltd.), UNILIN (registered trademark) 350, 425, 550, and 700, UNICID (registered trademark) 350, 425, 550, and 700 (Toyo Petrolite Co., Ltd.), Japan wax, beeswax, rice wax, candelilla wax, and carnauba wax (available from CERARICA NODA Co., Ltd.).

The content proportion of the wax in the blow-molded article (molded article or pellet) is, for example, 0.001% to 0.100% by mass, 0.002% to 0.050% by mass, or 0.002% to 0.030% by mass, based on the mass of the blow-molded article (molded article or pellet). A content proportion of the wax within the above range can more reliably prevent any adverse effects of the wax on the blow moldability of the preform (or pellet).

Identification of the presence of the wax and the determination of the wax content in the resin molded article can be performed, for example, by measurement using a thermal decomposition GC/MS.

In a blow-molded article (molded article or pellets), the total content of the inorganic layered double hydroxide and the zeolite relative to 100 parts by mass of the wax is preferably 400 to 5000 parts by mass, and more preferably 450 to 4600 parts by mass.

The blow-molded article (molded article or pellets) may contain carbon black. For example, carbon black may be added to a blow-molded article for visual reasons. The content (blending amount) of carbon black in a blow-molded article (molded article or pellet) may be, for example, 0.01% to 0.20% by mass, or 0.02% to 0.10% by mass.

### Manufacture of Blow-Molded Article

Next, a mode of a method of manufacturing a blow-molded article, such as a toner bottle, by blow molding will be described. The means for blow molding are not particularly limited, and a known method may be used. Examples of blow molding may include direct blow molding and stretch blow molding.

A blow-molded article can also be obtained by blow molding a pellet as a molded article molded from a resin mixture containing at least one selected from the group consisting of an inorganic layered double hydroxide and zeolite, polyethylene or polypropylene, and a wax. When a pellet is used for blow molding, direct blow molding is preferred. That is, the method of manufacturing a blow-molded article preferably includes a step of preparing a pellet that contains at least one selected from the group consisting of an inorganic layered double hydroxide and zeolite, polyethylene or polypropylene, and a wax, and a molding step of blow molding the pellet to form a blow-molded article.

Also, when stretch blow molding is performed, the method of manufacturing a blow-molded article includes a step of preparing a preform that contains at least one selected from the group consisting of an inorganic layered double hydroxide and zeolite, polyethylene or polypropylene, and a wax, and a molding step of stretch blow molding the preform to form the blow-molded article.

First, an example of a method of manufacturing a pellet will be described. The pellet can also be used as the material of the preform for use in biaxial stretch blow molding of a blow-molded article. For example, in the step of preparing a pellet or the step of preparing a preform, at least one selected from the group consisting of an inorganic layered double hydroxide and zeolite, polyethylene or polypropylene, and a wax are melt-kneaded to form a pellet. Pelletizing ensures uniform material composition and facilitates molding.

The wax may be a toner containing a wax. More specifically, at least one selected from the group consisting of an inorganic layered double hydroxide and zeolite, polyethylene or polypropylene, and an electrophotographic toner containing a wax are melt-kneaded to form a pellet.

At least one selected from the group consisting of an inorganic layered double hydroxide and zeolite may be mixed or melt kneaded in advance with polyethylene or polypropylene to prepare a polyethylene composition or a polypropylene composition, and a toner containing a wax may be mixed or melt kneaded thereto.

Further, for example, a toner bottle containing polyethylene or polypropylene to which electrophotographic toner containing a wax has adhered may be used. That is, it is preferred that the step of preparing a pellet includes a step of pulverizing a recycled toner bottle having an electrophotographic toner adhered thereon to obtain a pulverized product, and a step of melt-kneading at least one selected from the group consisting of an inorganic layered double hydroxide and zeolite, and the pulverized product to form a pellet. The electrophotographic toner preferably contains a wax, and the toner bottle preferably contains polyethylene or polypropylene.

The pellet thus obtained is subjected to blow molding, such as direct blow molding, to form a blow-molded article.

When a preform is formed, the following steps are preferred. That is, it is preferred that the step of preparing a preform includes a step of pulverizing a recycled toner bottle having an electrophotographic toner adhered thereon to obtain a pulverized product; a step of melt-kneading at least one selected from the group consisting of an inorganic layered double hydroxide and zeolite, and the pulverized product to form a pellet; and a step of forming the preform from the pellet formed. The electrophotographic toner preferably contains a wax, and the toner bottle preferably contains polyethylene or polypropylene.

The amount of the electrophotographic toner is preferably 0.100% to 1.000% by weight, and more preferably 0.150% to 0.500% by weight, based on the total of the toner bottle and the electrophotographic toner adhered to the toner bottle.

The means of melt-kneading is not particularly limited, and known means, such as a twin-screw extruder, may be employed. The temperature during melt-kneading is not particularly limited as long as the polyethylene or polypropylene can be melt-kneaded. For example, the temperature is 120°C to 300°C, and preferably 180°C to 240°C. The conditions of melt-kneading are also not particularly limited. After the melt-kneading, the melt-kneaded material is cooled and then formed into a pellet capable of being injection-molded using conventional means, such as a pelletizer.

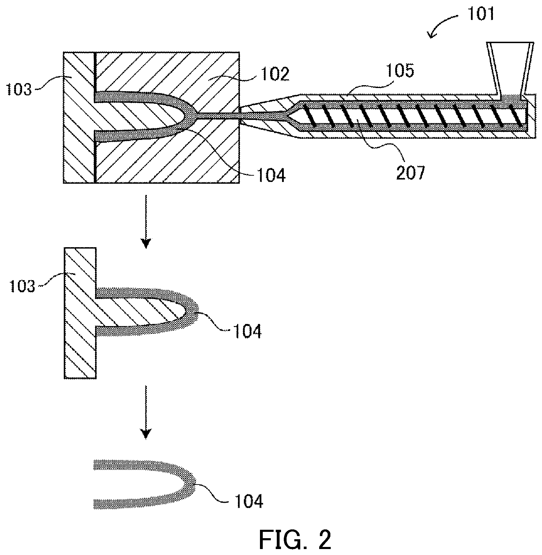

Meanwhile, when stretch blow molding is performed, a preform 104 having a test tube shape is molded by injection molding using the resulting pellet, as illustrated in FIG. 2. More specifically, a heating cylinder 105 heats materials fed into the injection molding machine 101 to bring the materials into a molten state, and an extruding screw 207 injects the molten materials into preform molds 102 and 103, and after cooling the materials, the materials are removed from the molds to obtain a preform 104. In the step of preparing a preform, it is preferred to obtain a preform from the obtained pellet by injection molding. In addition, the preform preferably has a test tube shape.

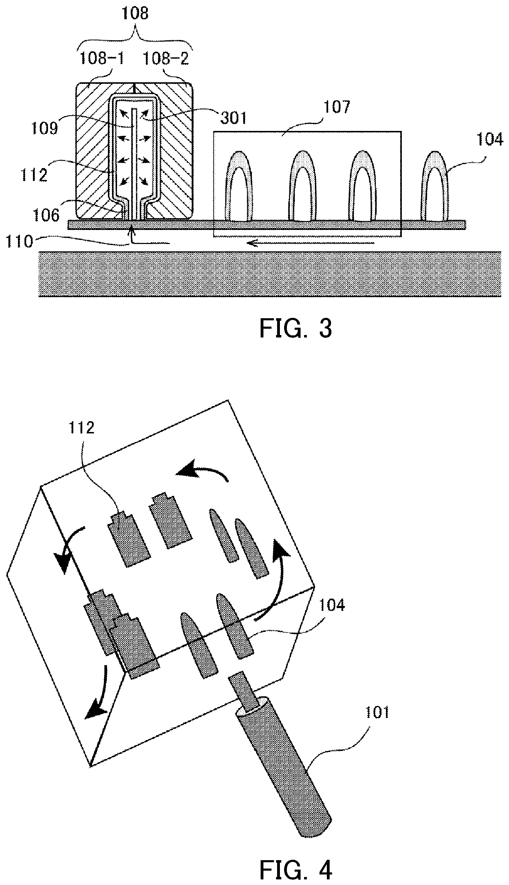

Next, the molding step will be described. In the molding step, a preform 104 is biaxially stretch-blown (biaxially stretch-molded) as illustrated in FIG. 3. First, the preform 104 is placed in a heating furnace 107 and heated to a temperature capable of stretching. The heated preform 104 is taken out of the heating furnace 107 and is placed in the mouth portion of a blow mold 108 in which a cavity is formed inside by combining the left-side mold 108-1 and the right-side mold 108-2.

It is preferable to place the heated preform in the mouth portion of the blow mold within a short time (for example, within 10 seconds) so that the temperature of the preform does not fall before the start of the biaxial stretching step.

The heated preform placed in the blow mold 108 is longitudinally stretched using a stretching rod 109. This stretching is referred to as primary stretching. In the primary stretching, it is preferable to introduce the gas so that the preform 104 does not come into contact with the stretching rod 109. The pressure of the gas in this process is referred to as the primary blowing pressure.

After the primary stretching, gas 110 is introduced from the preform mouth portion 106 so as to expand the preform in the lateral direction (circumferential direction). This process is referred to as secondary stretching. The pressure of the gas in this process is referred to as the secondary blowing pressure. Examples of the gas to be blown may include air, nitrogen, carbon dioxide, and argon.

By performing these primary stretching and secondary stretching, the preform 104 expands in respective directions indicated by arrows 301, comes into close contact with the inner wall of the blow mold 108, and is cooled and solidified in this state, thereby forming a blow-molded article 112. The molding step preferably includes a step of stretching a preform in the longitudinal direction of the preform using a stretching rod, and a step of introducing gas into the longitudinally-stretched preform to stretch the preform in the circumferential direction of the preform.

Then, the left-side mold 108-1 and the right-side mold 108-2 of the blow mold 108 are separated to remove the blow-molded article 112 from the blow mold 108. Since the blow-molded article 112 is stretched in both longitudinal and lateral directions, the blow-molded article 112 has high strength.

As described above, it is preferable that the preform is not crystallized (in a non-crystalline, that is, amorphous state) in the stretching step of the injection stretch blow molding. If the preform is in an amorphous state at a blow molding temperature, the resin is stretched and crystallized in the stretched direction by blow molding, that is, biaxially stretching molding, which allows the formation of a bottle with high strength.

The injection stretch blow molding method includes a one-stage method and a two-stage method. The one-stage method involves stretch blow molding a preform immediately after the preform is taken out of a mold as it is, or by adjusting the temperature using residual heat. The two-stage method involves cooling a preform to a room temperature once, then adjusting the temperature of the preform again, and then stretch blow molding the preform.

In the one-stage method, as illustrated in FIG. 4, a preform 104 is injection-molded by an injection molding machine 101, and then the cooling of the preform 104 is completed within a short time of 10 seconds or less during injection molding to prevent the temperature of the preform 104 from falling equal to or below the glass transition temperature of polyethylene or polypropylene. Then, the preform is immediately heated and maintained at the blow molding temperature (for example, 130°C to 170°C) and blow-molded to form the blow bottle 112. An integrated apparatus combining an injection molding apparatus and a blow molding apparatus is used.

In the two-stage method, the preform is injection-molded, cooled to a temperature equal to or below the glass transition temperature of polyethylene or polypropylene, and taken out. After that, the preform is heated in another blow molding apparatus to the blow molding temperature (for example, 130°C to 170°C) to perform blow molding. A separate injection molding apparatus and blow molding apparatus are used. For example, after the preform has been molded in the step of preparing a preform, the preform is cooled to a temperature equal to or below the glass transition temperature of polyethylene or polypropylene, and the molding step is then performed.

The one-stage method is preferred in that the energy for reheating is smaller in the one-stage method than in the two-stage method because the preform is not cooled to a temperature equal to or below the glass transition temperature in the one-stage method.

Next, a method using direct blow molding will be described as one mode of a method of manufacturing a blow-molded article.

Means for direct blow molding a pellet are not particularly limited, and known methods may be employed. A known direct blow molding machine can be used for direct blow molding. The extrusion temperature or the like can be set, as appropriate, according to the polyethylene or polypropylene to be used. Specific examples thereof may include the following methods.

The pellet obtained by the method described above is fed into an injection molding machine 801. A heating cylinder 802 heats the materials fed into the injection molding machine 801 to bring the materials into a molten state, and an extrusion screw 803 feeds the materials in a molten state into the head 804. Then, the materials in a molten state drip down under their own weight in a mold 805. Then, the resin dripping down by its own weight is sandwiched from both sides by the mold 805, and gas is introduced from a blow pin 806, so that the resin is brought into close contact with the inner wall of the mold 805. In this state, the resin is cooled and solidified to form a blow-molded article.

Next, a method of checking chemical attacks on a toner bottle obtained by blow molding, such as biaxial stretch blow molding or direct blow molding, will be described.

A toner is stored in a toner bottle obtained by blow molding. The toner bottle containing the toner is left in the operating environment. For the evaluation of chemical attacks, the operating environment was set at 50°C for 72 hours, and the toner bottle was left in a constant temperature bath for tests. The toner bottle exposed to the operating environment is taken out and, of the toners stored in the toner bottle, the toner adhering to the inner surface of the bottle is taken out. The bottle is turned upside down to discharge the toner from the bottle opening, and an adhesive tape is applied to the toner adhering to the inner surface of the bottle, allowing for easy extraction.

When the extracted toner is observed with an electron microscope to observe the deformation on the surface of the toner particle, deformed traces can be observed on the contact surface between the toner particle and the toner bottle when the toner particle undergoes chemical attacks.

### Image Forming Apparatus

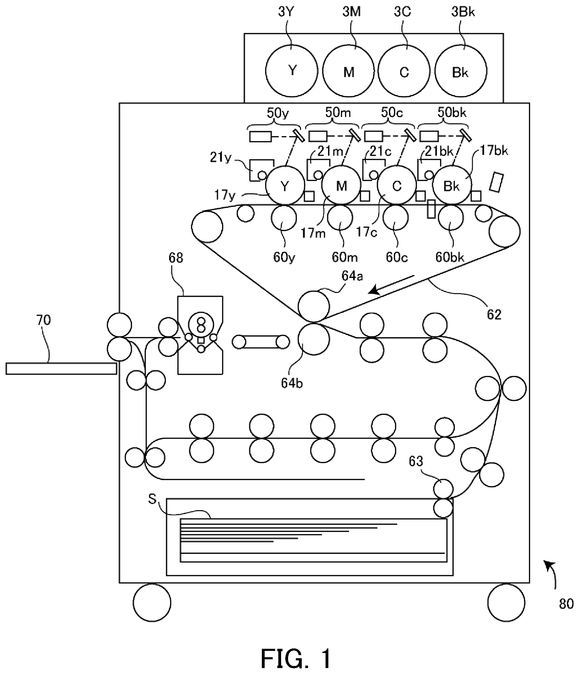

Hereinafter, the image forming apparatus will be described with reference to the drawings. FIG. 1 is a schematic diagram illustrating the configuration of a four-color image forming apparatus using the electrophotographic system, and the reference numeral 80 denotes the main body of the image forming apparatus. The image forming apparatus 80 is configured as a so-called intermediate tandem-type image forming apparatus in which four color image forming units are arranged on an intermediate transfer belt.

This image forming apparatus 80 forms an image in the following manner. First, in the image forming apparatus 80, an electrostatic latent image is formed on the photosensitive drums 17 (17y, 17m, 17c, and 17bk) using the exposure apparatuses 50 (50y, 50m, 50c, and 50bk) on the basis of print data. In the image forming apparatus 80, the formed electrostatic latent image is developed by the developing apparatuses 21 (21y, 21m, 21c, and 21bk) to form a toner image.

In the image forming apparatus 80, the toner image is transferred onto the intermediate transfer member 62 by the primary transfer apparatuses 60 (60y, 60m, 60c, and 60bk) and is transferred by the secondary transfer units 64 (64a and 64b) onto the sheet material S, which is supplied from the sheet feeding apparatus 63. Next, in the image forming apparatus 80, the toner image transferred onto the sheet S is fixed onto the sheet material S by fixing means 68, and the sheet material S is output onto the paper output tray 70.

In the image forming apparatus 80, a toner image is formed by the developing apparatuses 21, and detachable toner bottles 3 (3Y, 3M, 3C, and 3Bk) are used to supply toners to the developing apparatuses 21. The toner bottle according to at least one aspect of the present disclosure is a toner bottle used in this manner.

The toner bottle contains at least one selected from the group consisting of an inorganic layered double hydroxide and zeolite, polyethylene or polypropylene, and a wax.

### EXAMPLES

Hereinafter, the present disclosure will be described in detail using Examples and Comparative Examples. However, the present disclosure is not limited to these Examples. In the following Examples and Comparative Examples, "%" refers to "% by mass", unless otherwise stated.

### Production of Toner Bottle by Stretch Blow

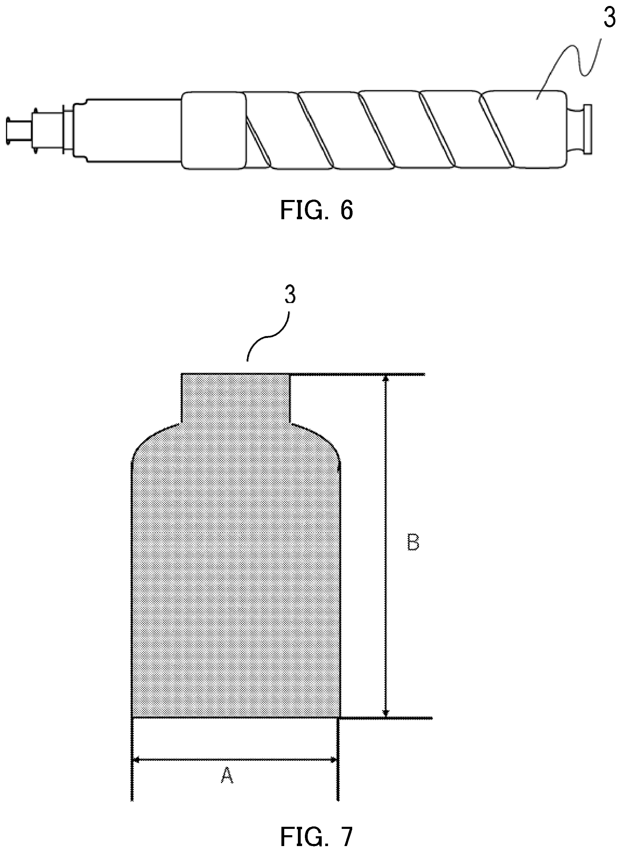

A one-stage blow molding apparatus (ASB-70DPH manufactured by Nissei ASB Machine Co., Ltd.) was used to produce a toner bottle 3 (total length: 439.5 mm, diameter: 101 mm) as illustrated in FIG. 6. The blow draw ratio was set to "longitudinal magnification × lateral magnification = 6.7".

The "longitudinal magnification" of the blow draw ratio is a value calculated by dividing the "total length after stretching" by the "total length (before stretching) of the portion (heated portion) reaching the stretching temperature of the preform".

The "lateral magnification" of the blow draw ratio is a value calculated by dividing the "diameter of the middle portion after stretching" by the "diameter (before stretching) of the middle portion of the preform".

First, the materials indicated in Table 1 below were melt-kneaded and pelletized to prepare a master batch having a carbon black concentration of 5% by mass.

**[Table 1]**

| Material | Blending ratio |
|---|---|
| Carbon black (Tradename: MA-100; manufactured by Mitsubishi Chemical Corp.) | 5% by mass |
| PP (Product name: J667TG, manufactured by Prime Polymer Co., Ltd.) | 95% by mass |

Next, the master batch having a carbon black concentration of 5% by mass prepared as described above and PP were mixed in the proportion indicated in Table 2 below, melt-kneaded, and then pelletized to obtain a pellet of a resin mixture.

**[Table 2]**

| Material | Blending ratio |
|---|---|
| Master batch having a carbon black concentration of 5% by mass | 1.4% by mass |
| PP (Product name: J667TG, manufactured by Prime Polymer Co., Ltd.) | 98.6% by mass |

### Stretch Blow Molding Conditions

The pellet of the resin mixture dried as described above was fed into an injection molding apparatus of a one-step stretch blow molding machine (product name: ASB-70DPH, manufactured by Nissei ASB Machine Co., Ltd.), and biaxial stretch blow molding was performed to mold a toner bottle. The one-step stretch blow molding machine described above is capable of performing the following processes consecutively (one-stage method): a step of obtaining a preform having a test tube shape by injection molding and a step of biaxial stretch blow molding the preform to obtain a molded article having a bottle shape. The screw diameter of the injection molding machine in the molding machine was 54 mm.

First, a mold capable of forming a preform having an outer diameter of 30 mm, a thickness of 3.7 mm, and a length of 220 mm was prepared as a preform molding mold. Then, a preform was molded under the following molding conditions.
- Screw diameter: 54 mm
- Screw position before filling the cavity with the resin mixture: 95 mm
- Injection speed
   Until the screw is advanced 5 mm: 50% of the maximum speed
   Until the screw is further advanced 20 mm: 30% of the maximum speed
   Until the screw is further advanced 35 mm: 25% of the maximum speed
   PV switching position: 35 mm
- First stage pressure holding
   30 MPa, 4 s
- Second stage pressure holding
   20 MPa, 7.99 s
- Barrel temperature: 230°C
- Cooling time: 10.0 seconds
- Mold temperature: 20°C

After the elapse of a cooling time for 10.0 seconds, the preform was removed from the mold and conveyed to a biaxial stretch blow station of the one-step stretch blow molding machine. The temperature of the preforms during the conveyance was controlled as follows.
- Preform heating temperature
   180°C at the position downward from the top of the preform by 10% of the total length of the preform
   200°C at the position downward from the top of the preform by 25% of the total length of the preform
   200°C at the position downward from the top of the preform by 50% of the total length of the preform
   140°C at the position downward from the top of the preform by 75% of the total length of the preform

The preforms adjusted to the temperature described above were then placed in a cylindrical mold having a size adapted to the size of the toner bottle and maintained at 20°C, and biaxial stretch blow molding was performed to produce a blow bottle. Since the preform during conveyance was heated, the temperature of the surface at the central part of the preform just before being introduced into the cylindrical mold was 150°C.

First, the stretching rod was inserted from the retracted position into the preform through the opening of the preform and advanced until the stretching rod came into contact with the top of the preform. The stretching rod was then further advanced with an air pressure of 1.2 MPa for driving the drawing rod. Then, primary air was introduced into the preform through the opening of the preform 0.5 seconds after the start of the further advancement of the stretching rod. The pressure of the primary air was set to 0.4 MPa. Next, the secondary air was introduced 0.7 seconds after the introduction of the primary air. The pressure of the secondary air was set to 1.2 MPa. Air was then introduced into the preform over 2.7 seconds from the start of the introduction of the primary air. The pressure in the preform was then returned to normal pressure over 0.5 seconds. Thus, a toner bottle was produced by blow molding. This bottle was a toner bottle including virgin PP, which had not been recycled.

According to the method described above, 200 toner bottles including virgin PP were produced.

### Example A1-1

### Production of Recycled Pellet

All of the 200 toner bottles including virgin PP prepared as described above were filled with a black toner stored in a toner cartridge (product name: Toner NPG-26, manufactured by Canon Inc.). The black toner contained an ester wax. Thereafter, the opening of a toner bottle including virgin PP was directed vertically downward to discharge the black toner in the bottle. Even after this operation, a small amount of black toner adhered to the inner wall of each toner bottle. The black toner remaining in the toner bottle was 0.321% by mass, as the average of 200 toner bottles, based on the mass of the main body of the toner bottle. The mass of the main body of a toner bottle refers to the mass of only the toner bottle and the toner remaining in the toner bottle after removing all supply components and other parts from the toner bottle. For the Examples below, the meaning of the "mass of the main body of a toner bottle" is the same.

Next, each toner bottle was pulverized using a pulverizer to a size of approximately 5 to 10 mm square to obtain a pulverized product (hereinafter also referred to as "flakes"). The wax content of the resulting flakes was measured using GPC and FT-IR, and was found to be 0.022 parts by mass relative to 100 parts by mass of the flakes.

To 99.5% by mass of these flakes, 0.5% by mass of a hydrotalcite compound (product name: DHT-4C, manufactured by Kyowa Chemical Industry Co., Ltd.) was added as an inorganic layered double hydroxide. The resulting mixture was melt-kneaded using a twin-screw extruder (PC-46, manufactured by Ikegai Corporation) at a temperature of 210°C, a screw rotation speed of 200 rpm, and a discharge rate of 50 kg/h, and then pelletized. The inorganic layered double hydroxide used here was filler-like, with a number-average particle diameter of 0.38 µm. (This recycled material was referred to as MR-PP (1-1)).

### Production of Blow Bottle

MR-PP (1-1) was fed into the one-step stretch blow molding machine mentioned above, and biaxial stretch blow molding was performed in the same manner as the blow molding conditions described above (the resulting toner bottle was referred to as a toner bottle (A1-1)). The toner was stored in the toner bottle (A1-1), and a test for checking chemical attacks was performed in an environment at 50°C for 72 hours. As a result, no deformation was found on the surface of the toner particle when the toner adhered to the inner surface of the toner bottle was observed.

Blow molding was performed in the same manner as in Example A1-1, except that the blending ratio of the flakes and the inorganic layered double hydroxide (hydrotalcite compound) was changed as indicated in Table 3, thereby preparing toner bottles (A1-2) and (A1-3), and a comparative toner bottle (A1-4). Blow molding for any of the toner bottles was able to be performed without any problem.

With respect to each of the obtained toner bottles, the deformation of the surface of the toner particle was observed in the same manner as in Example A1-1.

**[Table 3]**

| Toner bottle No. | Blending proportion (% by mass) | | Content (parts by mass) of inorganic layered double hydroxide relative to 100 parts by mass of wax | Blowability | Presence or absence of chemical attacks |
|---|---|---|---|---|---|
| | Flakes | Inorganic layered double hydroxide | | | |
| A1-1 | 99.5 | 0.5 | 2269 | OK | Not observed |
| A1-2 | 99.0 | 1.0 | 4560 | OK | Not observed |
| A1-3 | 99.9 | 0.1 | 452 | OK | Not observed |
| A1-4 | 100.0 | 0.0 | 0 | OK | Observed |

### Toner Bottle (A1-2)

Biaxial stretch blow molding of a preform was performed with an amount of 1.0% by mass of the inorganic layered double hydroxide added, and blow molding was found to be possible. In the evaluation of this toner bottle (A1-2) for chemical attacks, no deformation was found on the surface of the toner particle when a toner adhered to the inner surface of the toner bottle was observed.

### Toner Bottle (A1-3)

Biaxial stretch blow molding of a preform was performed with an amount of 0.1% by mass of the inorganic layered double hydroxide added, and blow molding was found to be possible without any problem. In the evaluation of this toner bottle (A1-3) for chemical attacks, no deformation was found on the surface of the toner particle when a toner adhered to the inner surface of the toner bottle was observed.

### Comparative Toner Bottle (A1-4)

Biaxial stretch blow molding of a preform was performed with an amount of 0.0% by mass of the inorganic layered double hydroxide added, and blow molding was found to be possible without any problem. In the evaluation of this comparative toner bottle (A1-4) for chemical attacks, deformation was found on the surface of the toner particle when a toner adhered to the inner surface of the toner bottle was observed, which showed that chemical attacks occurred. The reason for this would be that the wax causing chemical attacks is not adsorbed onto the inorganic layered double hydroxide if the inorganic layered double hydroxide is not added, and it is therefore considered that the wax migrates to the inner surface of the toner bottle to cause chemical attacks.

### Example A2-1

### Production of Recycled Pellet

To 99.5% by mass of the flakes prepared in the same manner as in Example A1-1, 0.5% by mass of zeolite (product name: Silton MT-8000, manufactured by Mizusawa Industrial Chemicals, Ltd.) was added. The resulting mixture was melt-kneaded using a twin-screw extruder (PC-46, manufactured by Ikegai Corporation) at a temperature of 210°C, a screw rotation speed of 200 rpm, and a discharge rate of 50 kg/h, and then pelletized. The zeolite used here was filler-like. (This recycled material was referred to as MR-PP (2-1)).

### Production of Blow Bottle

MR-PP (2-1) was fed into the one-step stretch blow molding machine mentioned above, and biaxial stretch blow molding was performed in the same manner as the blow molding conditions described above (the resulting toner bottle was referred to as a toner bottle (A2-1)). The toner was stored in the toner bottle (A2-1), and a test for checking chemical attacks was performed in an environment at 50°C for 72 hours. As a result, no deformation was found on the surface of the toner particle when the toner adhered to the inner surface of the toner bottle was observed.

Blow molding was performed in the same manner as in Example A2-1, except that the blending ratio of the flakes and zeolite was changed as indicated in Table 4, thereby preparing toner bottles (A2-2) and (A2-3), and a comparative toner bottle (A2-4). Blow molding for any of the toner bottles was able to be performed without any problem.

With respect to each of the obtained toner bottles, the deformation of the surface of the toner particle was observed in the same manner as in Example A2-1.

**[Table 4]**

| Toner bottle No. | Blending proportion (% by mass) | | Content (parts by mass) of zeolite relative to 100 parts by mass of wax | Blowability | Presence or absence of chemical attacks |
|---|---|---|---|---|---|
| | Flakes | Zeolite | | | |
| A2-1 | 99.5 | 0.5 | 2269 | OK | Not observed |
| A2-2 | 99.0 | 1.0 | 4560 | OK | Not observed |
| A2-3 | 99.9 | 0.1 | 452 | OK | Not observed |
| A2-4 | 100.0 | 0.0 | 0 | OK | Observed |

### Toner Bottle (A2-2)

Biaxial stretch blow molding of a preform was performed with an amount of 1.0% by mass of zeolite added, and blow molding was found to be possible without any problem. In the evaluation of this toner bottle (A2-2) for chemical attacks, no deformation was found on the surface of the toner particle when the toner adhered to the inner surface of the toner bottle was observed.

### Toner Bottle (A2-3)

Biaxial stretch blow molding of a preform was performed with an amount of 0.1% by mass of zeolite added, and blow molding was found to be possible without any problem. In the evaluation of this toner bottle (A2-3) for chemical attacks, no deformation was found on the surface of the toner particle when the toner adhered to the inner surface of the toner bottle was observed.

### Comparative Toner Bottle (A2-4)

Biaxial stretch blow molding of a preform was performed with an amount of 0.0% by mass of zeolite added, and blow molding was found to be possible without any problem. In the evaluation of this comparative toner bottle (A2-4) for chemical attacks, deformation was found on the surface of the toner particle adhered to the inner surface of the toner bottle, which showed that chemical attacks occurred. The reason for this would be that the wax causing chemical attacks is not adsorbed onto the zeolite if zeolite is not added, and it is therefore considered that the wax migrates to the inner surface of the toner bottle to cause chemical attacks.

### Production of Toner Bottle by Direct Blowing

A direct blow molding apparatus (model name: MSE-55E/54M-AP (E2), manufactured by Tahara Machinery Ltd.) was used to produce a toner bottle 3 illustrated in FIG. 7. In FIG. 7, A was set to φ76 mm and B was set to 150 mm.

First, the materials listed in Table 1 below were melt-kneaded and pelletized to prepare a master batch having a carbon black concentration of 5% by mass.

**[Table 5]**

| Material | Blending ratio |
|---|---|
| Carbon black (Tradename: MA-100; manufactured by Mitsubishi Chemical Corp.) | 5% by mass |
| PP (Product name: J667TG, manufactured by Prime Polymer Co., Ltd.) | 95% by mass |

Next, the master batch having a carbon black concentration of 5% by mass prepared as described above and PP were mixed in the proportion indicated in Table 2 below, melt-kneaded, and then pelletized to obtain a pellet of a resin mixture.

**[Table 6]**

| Material | Blending ratio |
|---|---|
| Master batch having a carbon black concentration of 5% by mass | 1.4% by mass |
| PP (Product name: J667TG, manufactured by Prime Polymer Co., Ltd.) | 98.6% by mass |

### Direct Blow Molding Conditions

The pellets of the resin mixture dried as described above were fed into a direct blow molding machine, and a toner bottle was molded under the following conditions. The screw diameter of the molding machine was 50 mm.

Direct blow molding was performed under the following molding conditions.
- Screw diameter: 50 mm
- Cylinder temperature: 210°C
- Extrusion amount: 10 kg/h
- Blowing pressure: 0.6 MPa
- Cooling time: 15 s
- Mold temperature: 15°C

The toner bottle was prepared by the direct blowing molding described above. This bottle was a toner bottle including virgin PP, which had not been recycled.

According to the method described above, 200 toner bottles including virgin PP were produced.

### Example A3-1

### Production of Recycled Pellet

In the same manner as in Example A1-1, 200 toner bottles including virgin PP, in which black toner remained, were prepared. The amount of the black toner remaining in the toner bottle was 0.321% by mass, as the average of 200 toner bottles, based on the mass of the main body of the toner bottle.

Next, the 200 toner bottles prepared as described above with toner remaining therein were pulverized by a pulverizer to a size of approximately 5 to 10 mm square to obtain a pulverized material (hereinafter also referred to as "flakes"). The wax content of the resulting flakes was measured using GPC and FT-IR, and was found to be 0.022 parts by mass relative to 100 parts by mass of the flakes.

To 99.5% by mass of these flakes, 0.5% by mass of a hydrotalcite compound (product name: DHT-4C, manufactured by Kyowa Chemical Industry Co., Ltd.) was added as an inorganic layered double hydroxide. The resulting mixture was melt-kneaded using a twin-screw extruder (PC-46, manufactured by Ikegai Corporation) at a temperature of 210°C, a screw rotation speed of 200 rpm, and a discharge rate of 50 kg/h, and then pelletized. The inorganic layered double hydroxide used here was filler-like, with a number-average particle diameter of 0.38 µm. (This recycled material was referred to as MR-PP (3-1)).

### Preparation of Blow Bottle

MR-PP (3-1) was fed into the direct blow molding machine described above, and direct blow molding was performed in the same manner as the blow molding conditions described above (the resulting toner bottle was referred to as a toner bottle (A3-1)). The toner was stored in the toner bottle (A3-1), and a test for checking chemical attacks was performed in an environment at 50°C for 72 hours. As a result, no deformation was found on the surface of the toner particle when the toner adhered to the inner surface of the toner bottle was observed.

Blow molding was performed in the same manner as in Example A3-1, except that the blending ratio of the flakes and the inorganic layered double hydroxide (hydrotalcite compound) was changed as indicated in Table 3, thereby preparing toner bottles (A3-2) and (A3-3), and a comparative toner bottle (A3-4). Blow molding for any of the toner bottles was able to be performed without any problem.

With respect to each of the obtained toner bottles, the deformation of the surface of the toner particle was observed in the same manner as in Example A3-1.

**[Table 7]**

| Toner bottle No. | Blending proportion (% by mass) | | Content (parts by mass) of inorganic layered double hydroxide relative to 100 parts by mass of wax | Blowability | Presence or absence of chemical attacks |
|---|---|---|---|---|---|
| | Flakes | Inorganic layered double hydroxide | | | |
| A3-1 | 99.5 | 0.5 | 2269 | OK | Not observed |
| A3-2 | 99.0 | 1.0 | 4560 | OK | Not observed |
| A3-3 | 99.9 | 0.1 | 452 | OK | Not observed |
| A3-4 | 100.0 | 0.0 | 0 | OK | Observed |

### Toner Bottle (A3-2)

Direct blow molding was performed with an amount of 1.0% by mass of the inorganic layered double hydroxide added, and blow molding was found to be possible without any problem. In the evaluation of this toner bottle (A3-2) for chemical attacks, no deformation was found on the surface of the toner particle when a toner adhered to the inner surface of the toner bottle was observed.

### Toner Bottle (A3-3)

Direct blow molding was performed with an amount of 0.1% by mass of the inorganic layered double hydroxide added, and blow molding was found to be possible without any problem. In the evaluation of this toner bottle (A3-3) for chemical attacks, no deformation was found on the surface of the toner particle when a toner adhered to the inner surface of the toner bottle was observed.

### Comparative Toner Bottle (A3-4)

Direct blow molding was performed with an amount of 0.0% by mass of the inorganic layered double hydroxide added, and blow molding was found to be possible without any problem. In the evaluation of this comparative toner bottle (A3-4) for chemical attacks, deformation was found on the surface of the toner particle adhered to the inner surface of the toner bottle, which showed that chemical attacks occurred. The reason for this would be that the wax causing chemical attacks is not adsorbed onto the inorganic layered double hydroxide if the inorganic layered double hydroxide is not added, and it is therefore considered that the wax migrates to the inner surface of the toner bottle to cause chemical attacks.

### Example A4-1

### Production of Recycled Pellet

To 99.5% by mass of the flakes prepared in the same manner as in Example A3-1, 0.5% by mass of zeolite (product name: Silton MT-8000, manufactured by Mizusawa Industrial Chemicals, Ltd.) was added. The resulting mixture was melt-kneaded using a twin-screw extruder (PC-46, manufactured by Ikegai Corporation) at a temperature of 210°C, a screw rotation speed of 200 rpm, and a discharge rate of 50 kg/h, and then pelletized. The zeolite used here was filler-like. (This recycled material was referred to as MR-PP (4-1)).

### Preparation of Blow Bottle

MR-PP (4-1) was fed into the direct blow molding machine described above, and direct blow molding was performed in the same manner as the blow molding conditions described above (the resulting toner bottle was referred to as a toner bottle (A4-1)). The toner was stored in the toner bottle (A4-1), and a test for checking chemical attacks was performed in an environment at 50°C for 72 hours. As a result, no deformation was found on the surface of the toner particle when the toner adhered to the inner surface of the toner bottle was observed.

Blow molding was performed in the same manner as in Example A4-1, except that the blending ratio of the flakes and zeolite was changed as indicated in Table 8, thereby preparing toner bottles (A4-2) and (A4-3), and a comparative toner bottle (A4-4). Blow molding for any of the toner bottles was able to be performed without any problem.

With respect to each of the obtained toner bottles, the deformation of the surface of the toner particle was observed in the same manner as in Example A4-1.

**[Table 8]**

| Toner bottle No. | Blending proportion (% by mass) | | Content (parts by mass) of inorganic layered double hydroxide relative to 100 parts by mass of wax | Blowability | Presence or absence of chemical attacks |
|---|---|---|---|---|---|
| | Flakes | Inorganic layered double hydroxide | | | |
| A4-1 | 99.5 | 0.5 | 2269 | OK | Not observed |
| A4-2 | 99.0 | 1.0 | 4560 | OK | Not observed |
| A4-3 | 99.9 | 0.1 | 452 | OK | Not observed |
| A4-4 | 100.0 | 0.0 | 0 | OK | Observed |

### Toner Bottle (A4-2)

Direct blow molding was performed with an amount of 1.0% by mass of zeolite added, and blow molding was found to be possible without any problem. In the evaluation of this toner bottle (A4-2) for chemical attacks, no deformation was found on the surface of the toner particle when a toner adhered to the inner surface of the toner bottle was observed.

### Toner Bottle (A4-3)

Direct blow molding was performed with an amount of 0.1% by mass of zeolite added, and blow molding was found to be possible without any problem. In the evaluation of this toner bottle (A4-3) for chemical attacks, no deformation was found on the surface of the toner particle when a toner adhered to the inner surface of the toner bottle was observed.

### Comparative Toner Bottle (A4-4)

Direct blow molding was performed with an amount of 0.0% by mass of zeolite added, and blow molding was found to be possible without any problem. In the evaluation of this comparative toner bottle (A4-4) for chemical attacks, deformation was found on the surface of the toner particle adhered to the inner surface of the toner bottle, which showed that chemical attacks occurred. The reason for this would be that the wax causing chemical attacks is not adsorbed onto the zeolite if zeolite is not added, and it is therefore considered that the wax migrates to the inner surface of the toner bottle to cause chemical attacks.

### Preparation of Toner Bottle by Direct Blowing

A direct blow molding apparatus was used to produce the toner bottle 3 illustrated in FIG. 7.

A was set to φ76 mm, and B was set to 150 mm. As a pellet material, KEIYO B5804 (product name), manufactured by Keiyo Polyethylene Co., Ltd., was used.

### Direct Blow Molding Conditions

The pellet of the resin mixture dried as described above was fed into a direct blow molding machine (model name: MSE-55E/54M-AP (E2), manufactured by Tahara Machinery Ltd.) to mold a toner bottle. The screw diameter of the injection molding machine in the molding machine was 50 mm.

Direct blow molding was performed under the following molding conditions.
- Screw diameter for extruder: 50 mm
- Extruder cylinder temperature: 182°C
- Extrusion amount: 10 kg/h
- Blowing pressure: 0.6 MPa
- Cooling time: 15 s
- Mold temperature: 15°C

The toner bottle was produced by the direct blowing molding described above. This bottle was a toner bottle including virgin PE, which had not been recycled.

According to the method described above, 200 toner bottles including virgin PE were produced.

### Example B1-1

### Production of Recycled Pellet

All of the 200 toner bottles including virgin PE prepared as described above were filled with a black toner stored in a toner cartridge (product name: Toner NPG-26, manufactured by Canon Inc.). The black toner contained an ester wax. Next, the opening of a toner bottle including virgin PE was directed vertically downward to discharge the black toner in the toner bottle. Even after this operation, a small amount of the black toner adhered to the inner wall of each toner bottle. The black toner remaining in the toner bottle was 0.321% by mass, as the average of 200 toner bottles, based on the mass of the main body of the toner bottle. The mass of the main body of a toner bottle refers to the mass of only the toner bottle and the toner remaining in the toner bottle after removing all supply components and other parts from the toner bottle (the same applies hereinafter).

Next, each toner bottle was pulverized using a pulverizer to a size of approximately 5 to 10 mm square to obtain a pulverized material (hereinafter also referred to as "flakes"). The wax content of the resulting flakes was measured using GPC and FT-IR, and was found to be 0.022 parts by mass relative to 100 parts by mass of the flakes.

To 99.5% by mass of these flakes, 0.5% by mass of a hydrotalcite compound (product name: DHT-4C, manufactured by Kyowa Chemical Industry Co., Ltd.) was added as an inorganic layered double hydroxide. The resulting mixture was melt-kneaded using a twin-screw extruder (PC-46, manufactured by Ikegai Corporation) at a temperature of 200°C, a screw rotation speed of 200 rpm, and a discharge rate of 50 kg/h, and then pelletized. The inorganic layered double hydroxide used here was filler-like, with a number-average particle diameter of 0.38 µm. (This recycled material was referred to as MR-PE (1-1)).

### Production of Blow Bottle

MR-PE (1-1) was fed into the direct blow molding machine described above, and direct blow molding was performed in the same manner as the blow molding conditions described above (the resulting toner bottle was referred to as a toner bottle (B1-1)). The toner was stored in the toner bottle (B1-1), and a test for checking chemical attacks was performed in an environment at 50°C for 72 hours. As a result, no deformation was found on the surface of the toner particle when the toner adhered to the inner surface of the toner bottle was observed.

Blow molding was performed in the same manner as in Example B1-1, except that the blending ratio of the flakes and the inorganic layered double hydroxide (hydrotalcite compound) was changed as indicated in Table 1, thereby preparing toner bottles (B1-2) and (B1-3), and a comparative toner bottle (B1-4). Blow molding for any of the toner bottles was able to be performed without any problem.

With respect to each of the obtained toner bottles, the deformation of the surface of the toner particle was observed in the same manner as in Example B1-1.

**[Table 9]**

| Toner bottle No. | Blending proportion (% by mass) | | Content (parts by mass) of inorganic layered double hydroxide relative to 100 parts by mass of wax | Blowability | Presence or absence of chemical attacks |
|---|---|---|---|---|---|
| | Flakes | Inorganic layered double hydroxide | | | |
| B1-1 | 99.5 | 0.5 | 2269 | OK | Not observed |
| B1-2 | 99.0 | 1.0 | 4560 | OK | Not observed |
| B1-3 | 99.9 | 0.1 | 452 | OK | Not observed |
| B1-4 | 100.0 | 0.0 | 0 | OK | Observed |

### Toner Bottle (B1-2)

Direct blow molding was performed with an amount of 1.0% by mass of the inorganic layered double hydroxide added, and blow molding was found to be possible without any problem. In the evaluation of this toner bottle (B1-2) for chemical attacks, no deformation was found on the surface of the toner particle when a toner adhered to the inner surface of the toner bottle was observed.

### Toner Bottle (B1-3)

Direct blow molding was performed with an amount of 0.1% by mass of the inorganic layered double hydroxide added, and blow molding was found to be possible without any problem. In the evaluation of this toner bottle (B1-3) for chemical attacks, no deformation was found on the surface of the toner particle when a toner adhered to the inner surface of the toner bottle was observed.

### Comparative Toner Bottle (B1-4)

Direct blow molding was performed with an amount of 0.0% by mass of the inorganic layered double hydroxide added, and blow molding was found to be possible without any problem. In the evaluation of this comparative toner bottle (B1-4) for chemical attacks, deformation was found on the surface of the toner particle adhered to the inner surface of the toner bottle, which showed that chemical attacks occurred. The reason for this would be that the wax causing chemical attacks is not adsorbed onto the inorganic layered double hydroxide if the inorganic layered double hydroxide is not added, and it is therefore considered that the wax migrates to the inner surface of the toner bottle to cause chemical attacks.

### Example B2-1

### Production of Recycled Pellet

To 99.5% by mass of the flakes prepared in the same manner as in Example B1-1, 0.5% by mass of zeolite (product name: Silton MT-8000, manufactured by Mizusawa Industrial Chemicals, Ltd.) was added. The resulting mixture was melt-kneaded using a twin-screw extruder (PC-46, manufactured by Ikegai Corporation) at a temperature of 200°C, a screw rotation speed of 200 rpm, and a discharge rate of 50 kg/h, and then pelletized. The zeolite used here was filler-like. (This recycled material was referred to as MR-PE (2-1)).

### Production of Blow Bottle

MR-PE (2-1) was fed into the direct blow molding machine described above, and direct blow molding was performed in the same manner as the blow molding conditions described above (the resulting toner bottle was referred to as a toner bottle (B2-1)). The toner was stored in the toner bottle (B2-1), and a test for checking chemical attacks was performed in an environment at 50°C for 72 hours. As a result, no deformation was found on the surface of the toner particle when the toner adhered to the inner surface of the toner bottle was observed.

Blow molding was performed in the same manner as in Example B2-1, except that the blending ratio of the flakes and zeolite was changed as indicated in Table 2, thereby preparing toner bottles (B2-2) and (B2-3) and a comparative toner bottle (B2-4). Blow molding for any of the toner bottles was able to be performed without any problem.

With respect to each of the obtained toner bottles, the deformation of the surface of the toner particle was observed in the same manner as in Example B2-1.

**[Table 10]**

| Toner bottle No. | Blending proportion (% by mass) | | Content (parts by mass) of zeolite relative to 100 parts by mass of wax | Blowability | Presence or absence of chemical attacks |
|---|---|---|---|---|---|
| | Flakes | Zeolite | | | |
| B2-1 | 99.5 | 0.5 | 2269 | OK | Not observed |
| B2-2 | 99.0 | 1.0 | 4560 | OK | Not observed |
| B2-3 | 99.9 | 0.1 | 452 | OK | Not observed |
| B2-4 | 100.0 | 0.0 | 0 | OK | Observed |

### Toner Bottle (B2-2)

Direct blow molding was performed with an amount of 1.0% by mass of zeolite added, and blow molding was found to be possible without any problem. In the evaluation of this toner bottle (B2-2) for chemical attacks, no deformation was found on the surface of the toner particle when a toner adhered to the inner surface of the toner bottle was observed.

### Toner Bottle (B2-3)

Direct blow molding was performed with an amount of 0.1% by mass of zeolite added, and blow molding was found to be possible without any problem. In the evaluation of this toner bottle (B2-3) for chemical attacks, no deformation was found on the surface of the toner particle when a toner adhered to the inner surface of the toner bottle was observed.

### Comparative Toner Bottle (B2-4)

Direct blow molding was performed with an amount of 0.0% by mass of zeolite added, and blow molding was found to be possible without any problem. In the evaluation of this comparative toner bottle (B2-4) for chemical attacks, deformation was found on the surface of the toner particle adhered to the inner surface of the toner bottle, which showed that chemical attacks occurred. The reason for this would be that the wax causing a chemical attack is not adsorbed onto the zeolite if zeolite is not added, and it is therefore considered that the wax migrates to the inner surface of the toner bottle to cause chemical attacks.

The present disclosure is not limited to the above embodiments, and various modifications and variations can be made without departing from the spirit and scope of the present invention. Therefore, the appended claims are attached to publicly disclose the scope of the present disclosure.

The present application claims priority based on Japanese Patent Application No. 2023-172338 filed on October 3, 2023, Japanese Patent Application No. 2023-172343 filed on October 3, 2023, and Japanese Patent Application No. 2024-137903 filed on August 19, 2024, the entire contents of which are incorporated herein by reference.

### [Reference signs list]

3: toner bottle, 21: developing apparatuses, 80: image forming apparatus, 60: primary transfer apparatuses, 62: intermediate transfer member, 63: sheet feeding apparatus, 64: secondary transfer units, 68: fixing means, 70: paper output tray, 101: injection molding machine, 102: preform molds, 103: preform molds, 104: preform, 105: heating cylinder, 106: preform mouth portion, 107: heating furnace, 108: blow mold, 109: stretching rod, 110: gas, 112: blow-molded article, 201: PP resin, 202: wax-derived component, 207: extruding screw

## Claims

1. A blow-molded article comprising:
at least one selected from the group consisting of an inorganic layered double hydroxide and zeolite;
polyethylene or polypropylene; and
a wax.

2. The blow-molded article according to claim 1, wherein a total content of the inorganic layered double hydroxide and the zeolite is 0.09% to 1.2% by mass based on a mass of the blow-molded article.

3. The blow-molded article according to claim 1 or 2, wherein the inorganic layered double hydroxide comprises a hydrotalcite compound.

4. The blow-molded article according to any one of claims 1 to 3, wherein the polyethylene or the polypropylene is material recycled polyethylene or material recycled polypropylene.

5. The blow-molded article according to any one of claims 1 to 4, wherein the wax comprises an ester wax.

6. The blow-molded article according to any one of claims 1 to 5, wherein the blow-molded article is a toner bottle.

7. A toner bottle comprising:
at least one selected from the group consisting of an inorganic layered double hydroxide and zeolite;
polyethylene or polypropylene; and
a wax.

8. A method of manufacturing the blow-molded article according to any one of claims 1 to 6, the method comprising:
a step of preparing a preform containing at least one selected from the group consisting of the inorganic layered double hydroxide and the zeolite, the polyethylene or the polypropylene, and the wax, and
a molding step of stretch blow molding the preform to form the blow-molded article.

9. The method of manufacturing the blow-molded article according to claim 8, wherein
the step of preparing a preform comprises:
a step of pulverizing a recycled toner bottle having an electrophotographic toner adhered thereon to obtain a pulverized product,
a step of melt-kneading at least one selected from the group consisting of the inorganic layered double hydroxide and the zeolite, and the pulverized product to form a pellet, and
a step of forming the preform from the pellet formed,
the electrophotographic toner comprises the wax, and
the toner bottle comprises the polyethylene or the polypropylene.

10. A method of manufacturing the blow-molded article according to any one of claims 1 to 6, the method comprising:
a step of preparing a pellet containing at least one selected from the group consisting of the inorganic layered double hydroxide and the zeolite, the polyethylene or the polypropylene, and the wax, and
a molding step of blow molding the pellet to form the blow-molded article.

11. The method of manufacturing the blow-molded article according to claim 10, wherein
the step of preparing a pellet comprises:
a step of pulverizing a recycled toner bottle having an electrophotographic toner adhered thereon to obtain a pulverized product and a step of melt-kneading at least one selected from the group consisting of an inorganic layered double hydroxide and zeolite, and the pulverized product to form a pellet,
the electrophotographic toner comprises the wax, and
the toner bottle comprises the polyethylene or the polypropylene.

12. A molded article, comprising:
at least one selected from the group consisting of an inorganic layered double hydroxide and zeolite;
polyethylene or polypropylene; and
a wax.

13. A pellet, comprising:
at least one selected from the group consisting of an inorganic layered double hydroxide and zeolite;
polyethylene or polypropylene; and
a wax.
